# EUROPEAN PATENT APPLICATION

(11) **EP 4 604 515 A1**
(43) Date of publication of application: **20.08.2025**
(21) Application number: 25156775.6
(22) Date of filing: 10.02.2025
(51) Int. Cl.: H04N 13/239, H04N 13/246, H04N 13/344

(54) **CALIBRATING SENSOR ALIGNMENT OFFSET FOR STEREOSCOPIC SENSOR SYSTEMS**

(30) Priority: 14.02.2024 US 202418441341
(71) Applicant: Microsoft Technology Licensing, LLC, Redmond, WA 98052-6399 (US)
(72) Inventor: Ong, Xiao Chuan, Redmond, WA, 98052 (US); Chen, Moran, Redmond, WA, 98052 (US); Porubanova, Michaela, Redmond, WA, 98052 (US)
(74) Representative: Grünecker Patent- und Rechtsanwälte PartG mbB

(57) **Abstract**

One example provides a method for calibrating a sensor alignment offset on a display device comprising a stereoscopic sensor system and a stereoscopic display system. The method comprises obtaining left and right sensed images using the stereoscopic sensor system, forming a pair of images with binocular divergence based at least upon the left sensed image and the right sensed image, and displaying the pair of images with binocular divergence using the stereoscopic display system. The method further comprises receiving a user input relating to a vertical disparity of the pair of images with binocular divergence in an alignment direction, and based at least upon the user input, calibrating the sensor alignment offset of the left image sensor and the right image sensor in the alignment direction, and applying the sensor alignment offset to adjust the display of images from the stereoscopic sensor system.

## Description

### BACKGROUND

A head mounted display (HMD) device can use a stereoscopic display system with separate left-eye and right-eye projectors to display three-dimensional (3D) content, such as virtual reality (VR) and mixed reality (MR) content. Some HMD devices can display sensed images captured using an on-board stereoscopic sensor system in MR and passthrough VR applications. In MR applications, the HMD device displays a combination of computer-generated content and sensed real-world imagery. Thus, the computer-generated content can appear as an overlay to the real-world in the sensed imagery to a user of the HMD device. In passthrough VR applications, the HMD device presents sensed real-world imagery of the real-world environment, such as to allow a user to temporarily view the surrounding environment during a VR experience.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

One example provides a method for calibrating a sensor alignment offset on a display device comprising a stereoscopic sensor system and a stereoscopic display system. The method comprises obtaining left and right sensed images using the stereoscopic sensor system, forming a pair of images with binocular divergence based at least upon the left sensed image and the right sensed image, and displaying the pair of images with binocular divergence using the stereoscopic display system. The method further comprises receiving a user input relating to a vertical disparity of the pair of images with binocular divergence in an alignment direction, based at least upon the user input, calibrating the sensor alignment offset of the left image sensor and the right image sensor in the alignment direction, and applying the sensor alignment offset to adjust the display of images from the stereoscopic sensor system.

### BRIEF DESCRIPTION OF THE DRAWINGS

FIGS. 1A, 1B, 1C, 1D, and 1E schematically illustrate an example user-in-the-loop calibration process to calibrate a stereoscopic sensor system on an HMD device.
FIG. 2 depicts a block diagram of an example display device.
FIG. 3 schematically illustrates a simplified optical depiction of misalignment of a left sensor and a right sensor of a stereoscopic sensor system.
FIGS. 4A-4B illustrate a flow diagram of an example method for calibrating a sensor alignment offset in a stereoscopic sensor system.
FIG. 5 illustrates a block diagram of an example computing system.

### DETAILED DESCRIPTION

As mentioned above, an HMD device can utilize a stereoscopic sensor system to sense images of a surrounding environment. When used in a passthrough VR or MR mode, left-eye images and right-eye images from the stereoscopic sensor system can be displayed respectively using a right projector and a left projector of a stereoscopic display of the HMD device. However, misalignment of the stereoscopic sensor system and/or the stereoscopic display system may result in vertical disparity between left-eye images and right-eye images of the stereoscopic images. Such vertical disparity (e.g., dipvergence) may impact an experience for a user of the HMD device.

Some HMD devices with non-rigid frames may be more susceptible to misalignments of a stereoscopic sensor system and stereoscopic display system than HMD devices with rigid frames. To address stereoscopic display misalignment issues, some HMD devices utilize a user-in-the-loop calibration process to calibrate a display alignment offset of the left projector and the right projector of the stereoscopic display system. As used herein, the term "user-in-the-loop calibration process" refers to a calibration process that utilizes feedback from a user to determine a degree of left/right projector offset. An example user-in-the-loop calibration process can display dichoptic lines to help a user calibrate the display alignment offset. In such a calibration process, horizontal dichoptic lines are displayed by the left projector and the right projector. The horizontal dichoptic lines are positioned to be at a same vertical position when the left projector and the right projector are vertically aligned. If the horizontal lines do not appear to be at a same vertical position to a user, the user makes an input to adjust the horizontal lines so they appear to be at the same vertical position. The adjustment can be made by vertically offsetting an image displayed by the left projector, an image displayed by the right projector, or images displayed by both projectors (for example, by offsetting a starting scan line of an image in a vertical direction). The adjustment is stored as a calibration offset to be applied for the display of images by the stereoscopic display system.

However, such user-in-the-loop stereoscopic display system calibrations do not correct misalignment issues in a stereoscopic sensor system. Therefore, even after the HMD device adjusts a stereoscopic image for a display alignment offset, sensed images from a vertically misaligned stereoscopic sensor system that are displayed by the calibrated stereoscopic display system may exhibit vertical disparity due to vertically misaligned left and right image sensors. Calibrating a stereoscopic sensor poses challenges, as generated virtual dichoptic lines used to calibrate left-eye and right-eye displays are not positionally related to the real world sensed by the left and right image sensors.

Accordingly, examples are disclosed that relate to calibrating a sensor alignment offset of a stereoscopic pair of image sensors utilizing a pair of images with binocular divergence. Briefly, the disclosed examples obtain a left sensed image from a left image sensor and a right sensed image from a right image sensor. Then, a pair of images with binocular divergence is formed using at least the left sensed image and the right sensed image. For example, when adjusting vertical alignment, the left sensed image and the right sensed image can be displaced horizontally. The displacement is of sufficient magnitude to form a pair of images with binocular divergence, such that the human visual perception system does not try to fuse them into a same image. Alternatively or additionally, a suitably oriented feature (e.g., oriented along a non-alignment direction) can be identified in the left sensed image and the right sensed image, and highlighted or isolated in the pair of images with binocular divergence. The pair of images with binocular divergence then are displayed using the stereoscopic display system. The pair of images with binocular divergence appear as two separate images to the user. If the stereoscopic image sensors are misaligned vertically, the two separate images will appear to have a vertical offset. Then the user can use any suitable user input mechanism to adjust the vertical alignment of the images. Example input mechanism include gesture (e.g. as sensed by the stereoscopic image sensor), speech, and hardware interface control (e.g., button, touchpad, etc.). The user input relates to a vertical disparity of the pair of images with binocular divergence in an alignment direction. In some examples, the user input can indicate an adjustment of at least part of the pair of images with binocular divergence in the alignment direction. Based at least upon the user input, the method calibrates a sensor alignment offset of the left image sensor and the right image sensor in the alignment direction. The sensor alignment offset can then be applied to the display of stereoscopic images in a passthrough VR or MR mode so that the left sensed and right sensed images are vertically aligned. Thus, the pair of images with binocular divergence is analogous to dichoptic lines used for stereoscopic display calibration, but is positionally related to the real world, unlike generated dichoptic lines.

In some examples, a display alignment offset of left and right projectors of the stereoscopic display system is also calibrated. In some such examples, the display alignment offset can be calibrated before the sensor alignment offset. In calibrating the display alignment offset, dichoptic lines are presented by the left and right projectors, respectively, and a user input is received in response to presenting the display images. The display alignment offset is calibrated based at least upon the received user input. This enables the display device to separately address misalignments in the stereoscopic sensor system and the stereoscopic display system. Further, depending on the content presented by the stereoscopic display system, different combinations of the sensor alignment offset and the display alignment offset may be used. For example, passthrough VR can utilize both the sensor alignment offset and the display alignment offset. Further, non-passthrough VR or MR can utilize the display alignment offset. Therefore, the sensor alignment offset and the display alignment offset can help to reduce user discomfort (such as arising from dipvergence) while the display device operates in various VR/MR environments.

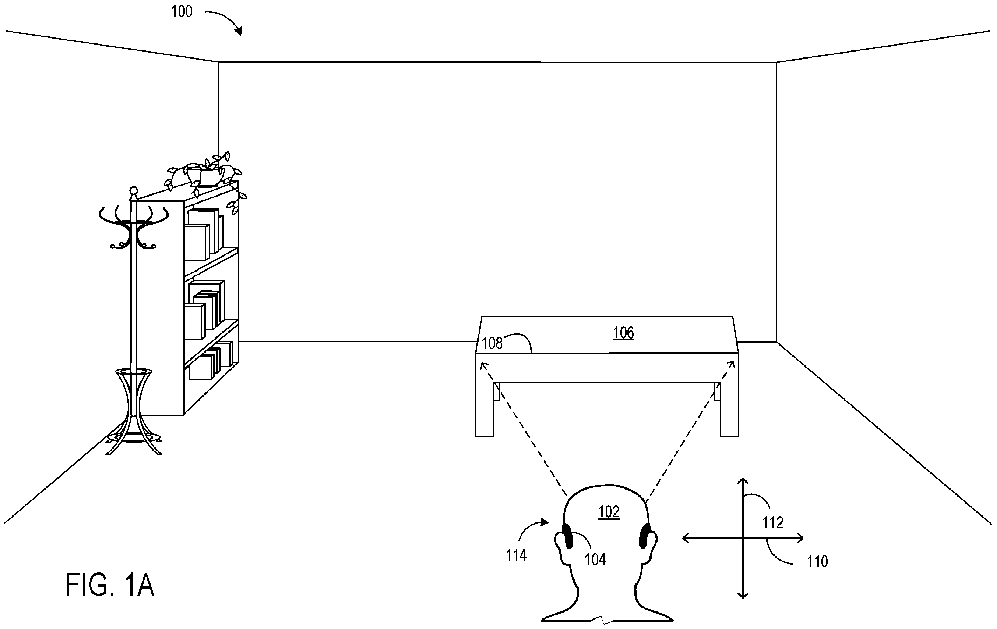

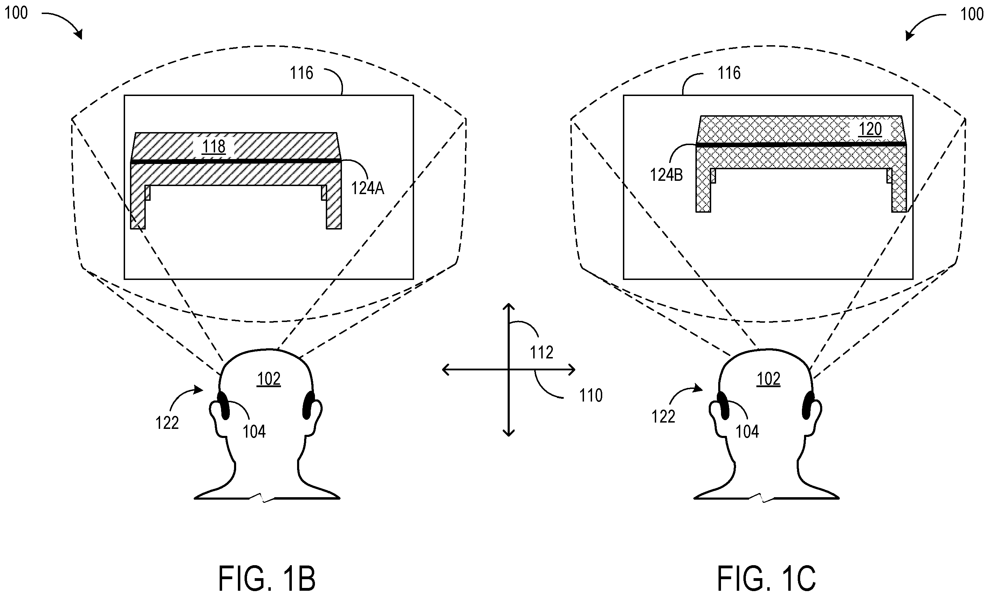

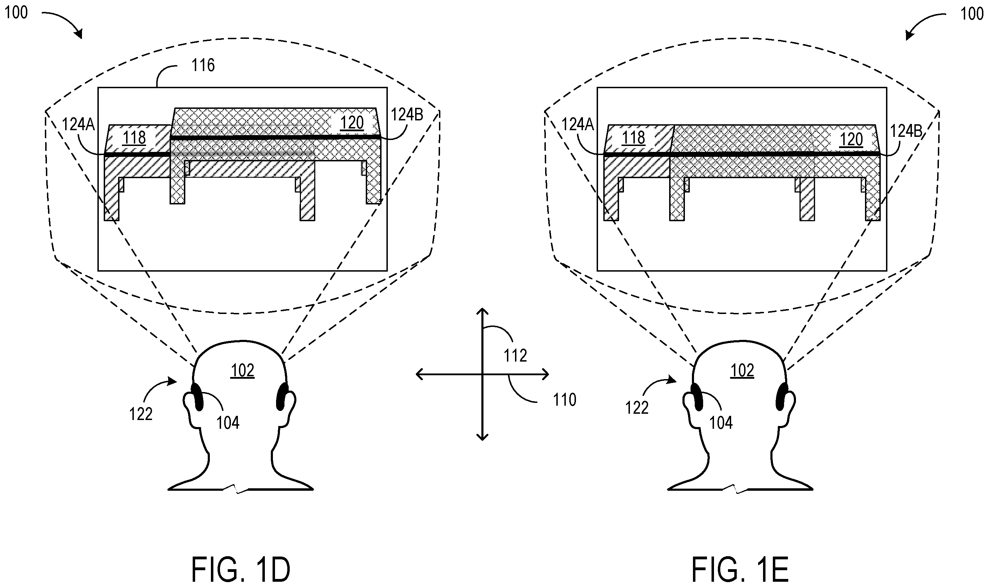

FIGS. 1A, 1B, 1C, 1D, and 1E schematically depict a display device utilizing an example user-in-the-loop calibration process 100 for a stereoscopic sensor system with a left image sensor and a right image sensor. In FIG. 1A, a user 102 is utilizing the display device (depicted here as a head mounted display (HMD) device 104) to view objects in the real-world including a table 106 having a linear edge 108. The user 102 can be using the HMD device 104 in a passthrough VR mode or MR mode, as examples. As depicted, linear edge 108 has a larger dimension in a non-alignment direction 110 than in an alignment direction 112 from the perspective of the HMD device 104. Such a configuration is described herein as "oriented in the non-alignment direction." As will be apparent, this helps a disparity in the alignment direction 112 of stereoscopic reprojections of the linear edge 108 to be visible to the user 102. Additionally, the linear edge 108 also has relatively sharp transitions between adjacent surfaces of the table 106, and therefore has a relatively high visual contrast compared to a background (e.g., the surfaces of the table 106). Such high visual contrast corresponds to a high spatial frequency.

The HMD device 104 comprises a stereoscopic sensor system 114 for obtaining image data of the real-world. A left image sensor obtains a left sensed image, and a right image sensor obtains a right sensed image. The HMD device 104 forms a pair of images with binocular divergence 116 based at least upon the left sensed image and the right sensed image, as shown in FIGS. 1B and 1C. Here, the HMD device 104 displaces the left and right sensed images by forming a left offset image 118 based at least upon the left sensed image and a right offset image 120 based at least upon the right sensed image. Either or both of the left offset image 118 and the right offset image 120 can be offset from their original positions. This forms the pair of images with binocular divergence 116.

In some examples, the HMD device 104 can identify linear features, such as edges in the scene, using suitable edge-detection algorithms, such as various search-based algorithms and/or zero-crossing based algorithms A suitable linear edge 108 in each of the left offset image and the right offset image then can be highlighted (e.g., by using an overlay over each of the left offset image and the right offset image), isolated (e.g., by displaying as a simple horizontal line in absence of the left offset image and right offset image), or displayed in any other suitable manner. The linear edge 108 in the left offset image 118 and the linear edge 108 in the right offset image 120 are not fused by the human visual perception system, but rather appear as two separate objects to the user 102 as discussed with reference to FIG. 1D.

In FIG. 1B, a stereoscopic display system 122 of the HMD device 104 displays the left offset image 118. Here, the linear edge 108 appears as a left alignment line 124a in the left offset image 118. In FIG. 1B, the left alignment line 124a is highlighted over the image of the table. In other examples, the left alignment line 124a may be displayed alone, rather than as an overlay over the table in the left offset image. Similarly, in FIG. 1C, the stereoscopic display system 122 displays the right offset image 120 having a right alignment line 124b. While shown separately in FIGS. 1B and 1C, the left and right alignment lines 124a, 124b are displayed so that they are perceived simultaneously by the user 102, as shown in FIG. 1D.

In the depicted examples, the left offset image 118 has been adjusted to the left (with respect to the HMD device 104) and the right offset image 120 has been adjusted to the right (with respect to the HMD device 104), in the non-alignment direction. In some examples, the HMD device 104 can be configured to separate the left offset image 118 and the right offset image 120 by a predetermined amount in the non-alignment direction 110, such as around ten degrees (with reference to a field of view of the user 102). This can be sufficient magnitude to avoid the visual perception system of the user 102 fusing together the left offset image 118 and the right offset image 120 into one object. The predetermined amount can be stored as a hardcoded value or stored as a programable value (e.g., in software). In other examples, the magnitude of the adjustment can be determined per user of the HMD device 104.

As can be seen in FIG. 1D, the pair of images with binocular divergence 116 has a disparity in the alignment direction 112. To address such disparity, the user 102 provides input adjusting the left offset image 118 and/or the right offset image 120 until they are aligned in the alignment direction 112 as depicted in FIG. 1E. Here, the user 102 can utilize the alignment lines 124a, 124b to visually determine when the left offset image 118 and the right offset image 120 are aligned. Therefore, the user input indicates an adjustment of one or both of the left offset image 118 or the right offset image 120. The relatively high spatial frequency of the alignment lines 124 can help enable the user 102 to provide input with a more accurate adjustment than a feature having a lower spatial frequency in the alignment direction 112, such as a wall, for example. In other examples, the user input can relate to the vertical disparity of the left offset image 118 and the right offset image 120.

The HMD device 104 is configured to calibrate a sensor alignment offset based at least upon the user input. The sensor alignment offset is stored as a calibration for the degree of vertical disparity between the left image sensor and the right image sensor. The calibration can specify a vertical image adjustment to make to one of left image sensor or right image sensor, or to both image sensors. The depicted user-in-the-loop calibration process 100 is illustrative. In other examples, one or more aspects of the user-in-the-loop calibration process 100 may be performed in another manner. In further examples, a user-in-the-loop calibration process may include additional aspects.

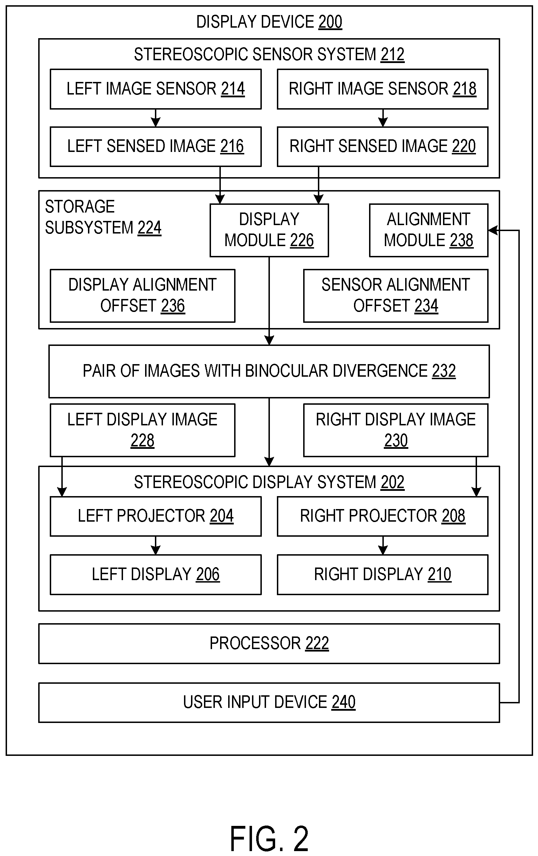

FIG. 2 depicts a block diagram of an example display device 200. The display device 200 is configured to utilize image data of the real-world for suitable computer-based experiences, such as MR experiences or passthrough VR experiences. The HMD device 104 is an example implementation of the display device 200. The display device 200 comprises a stereoscopic display system 202 for presenting stereoscopic images for viewing. The stereoscopic display system 202 includes a left projector 204 configured to present an image to a left display 206 for viewing. Similarly, the stereoscopic display system 202 also comprises a right projector 208 configured to provide a right image to a right display 210 for viewing.

The display device 200 also comprises a stereoscopic sensor system 212 for obtaining image data of the real-world. The stereoscopic sensor system 212 includes a left image sensor 214 configured to obtain a left sensed image 216. Similarly, the stereoscopic sensor system 212 also includes a right image sensor 218 configured to obtain a right sensed image 220. The left image sensor 214 and the right image sensor 218 each can include an infrared camera, an RGB camera, a depth camera, and/or another suitable image sensor or combination of image sensors.

The display device 200 further comprises a processor 222 and a storage subsystem 224. The storage subsystem 224 includes a display module 226 executable by the processor 222 to selectively control the stereoscopic display system 202 to present a left display image 228 and a right display image 230 for viewing respectively using the left projector 204 and the right projector 208. Together, the left display image 228 and the right display image 230 can comprise suitable computer-generated content.

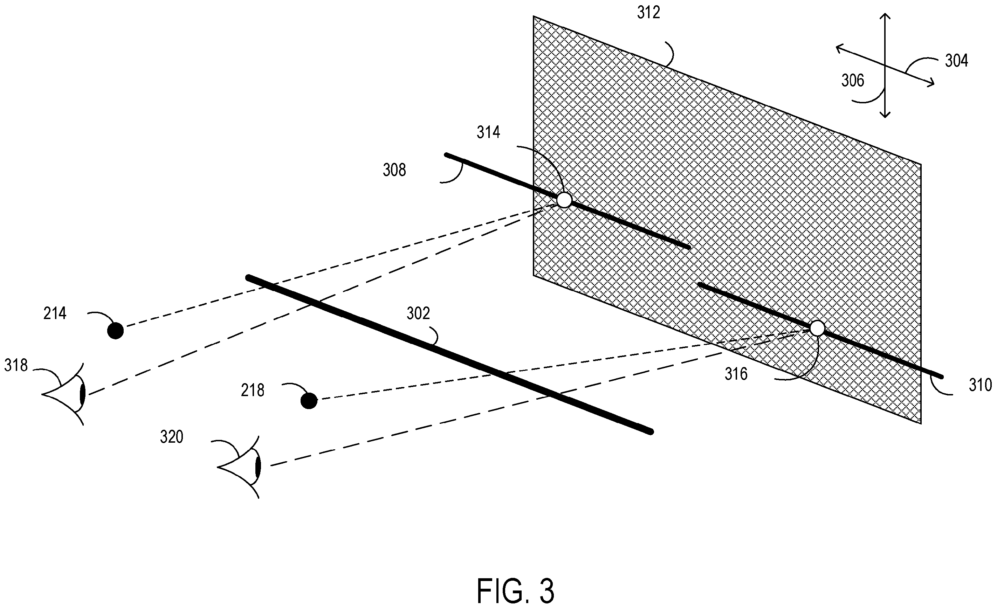

The display module 226 is also configured to selectively control the stereoscopic display system 202 to reproject sensed images from the stereoscopic sensor system 212, including the left sensed image 216 and the right sensed image 220. Further, the display module 226 is configured to adjust at least one corresponding display location of the left sensed image 216 and the right sensed image 220 to form a pair of images with binocular divergence 232, as explained in more detail with reference to FIG. 3. Also, the display module 226 can selectively control the stereoscopic display system 202 to display the pair of images with binocular divergence 232. The display module 226 is configured to control the stereoscopic display system 202 to adjust the display location of the sensed images from the stereoscopic sensor system 212 based at least upon the sensor alignment offset 234 and/or the display alignment offset 236. Such a configuration helps to reduce user discomfort arising from misalignment in the stereoscopic sensor system 212 and/or the stereoscopic display system 202. In other examples, the sensor alignment offset 234 may be used to control physical orientations of the left image sensor 214 and/or the right image sensor 218 relative to the display device 200 to address misalignment issues in the stereoscopic sensor system 212.

The storage subsystem 224 also comprises an alignment module 238 executable by the processor 222 to calibrate the sensor alignment offset 234. Here, the alignment module 238 is configured to receive a user input from a user input device 240. The user input can be received in response to the stereoscopic display system 202 displaying the pair of images with binocular divergence 232, for example. The user input device can be integrated with or peripheral to the HMD device 104. Examples of the user input device 240 include an image sensor for capturing gesture input, a microphone for capturing audio input, a mouse, a trackpad or touchscreen, etc. The user input relates to a vertical disparity of the pair of images with binocular divergence 232 in an alignment direction as discussed with reference to the disclosed user-in-the-loop calibration process.

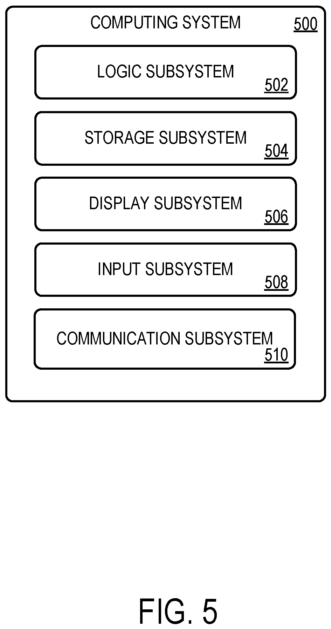

The alignment module 238 is further executable by the processor 222 to calibrate the display alignment offset 236. More particularly, the alignment module 238 is configured to receive a user input in response to the stereoscopic display system 202 presenting the left display image 228 and the right display image 230. The user input relates to a vertical disparity of the left display image 228 and the right display image 230. In some examples, the user input can indicate an adjustment to make to at least one of the left display image 228 or the right display image 230 in the alignment direction. Further, the alignment module 238 is configured to calibrate the display alignment offset 236 of the left projector 204 and the right projector 208 in the alignment direction based at least upon the user input. Additional aspects of the processor 222 and the storage subsystem 224 are discussed with reference to FIG. 5.

FIG. 3 schematically illustrates a simplified optical depiction of how the misalignment of a left sensor and a right sensor of a stereoscopic sensor system leads to vertical offset in displayed images in a passthrough VR or MR mode, such as illustrated in FIGS. 1A-1E. More particularly, FIG. 3 schematically depicts a real-world object 302 (shown here as an arbitrary linear feature). Real-world object 302 can represent an edge identified in the real-world environment, for example. As shown, the real-world object 302 is oriented in a non-alignment direction 304. As another example, instead of an edge of an arbitrary object in the real-world, a real-world object can be specifically designed to assist with stereoscopic image sensor vertical misalignment correction. For example, an image of Gabor patches with high frequency features can be used. In further examples, other suitable real-world objects and/or images may be used.

The display device 200 forms a pair of images with binocular divergence based at least upon a left sensed image and a right sensed image respectively obtained from the left image sensor 214 and the right image sensor 218. As depicted, the pair of images with binocular divergence includes a left offset image 308 and a right offset image 310. More particularly, the display device 200 forms the left offset image 308 of the real-world object 302 based at least upon the left sensed image. Similarly, the display device 200 also forms the right offset image 310 of the real-world object 302 based at least upon the right sensed image.

Here, the display device 200 adjusts the left offset image 308 to a first display location 314 on a reprojection plane 312. Further, the display device 200 adjusts the right offset image 310 to a second display location 316 on the reprojection plane 312. Additionally, the left offset image 308 is displayed to a left-eye 318 of the user and the right offset image 310 is displayed to a right-eye 320 of the user (e.g., displayed in a dichoptic/monocular manner). As can be seen, the resulting pair of images with binocular divergence includes two separate images of the real-world object 302 on the reprojection plane 312.

As can be seen in FIG. 3, a disparity between the left offset image 308 and the right offset image 310 in the alignment direction 306 is visible to the user. The user can provide input indicating an adjustment of the left offset image 308 and/or the right offset image 310 that results in them being aligned in the alignment direction 306 (not depicted in FIG. 3). As previously mentioned, the display device 200 can calibrate the sensor alignment offset 234 based at least upon the user input. In such a manner, real-world object 302 enables the user to visualize and calibrate a sensor alignment offset to compensate for misalignment between the left image sensor 214 and the right image sensor 218. FIG. 3 is illustrative.

As previously mentioned, a display device can utilize a calibrated sensor alignment offset to help address misalignment issues in a stereoscopic sensor system on the display device. Similarly, a calibrated display alignment offset can help to address misalignment issues in a stereoscopic display system on the display device. Addressing such misalignment issues can help to reduce user discomfort, such as arising from dipvergence. The display device can utilize various suitable combinations of the sensor alignment offset and the display alignment offset depending on desired visual content. As a specific example, a display device may utilize both the sensor alignment offset and the display alignment offset for adjusting reprojected content. Further, the same display device may utilize the display alignment offset for computer-generated content.

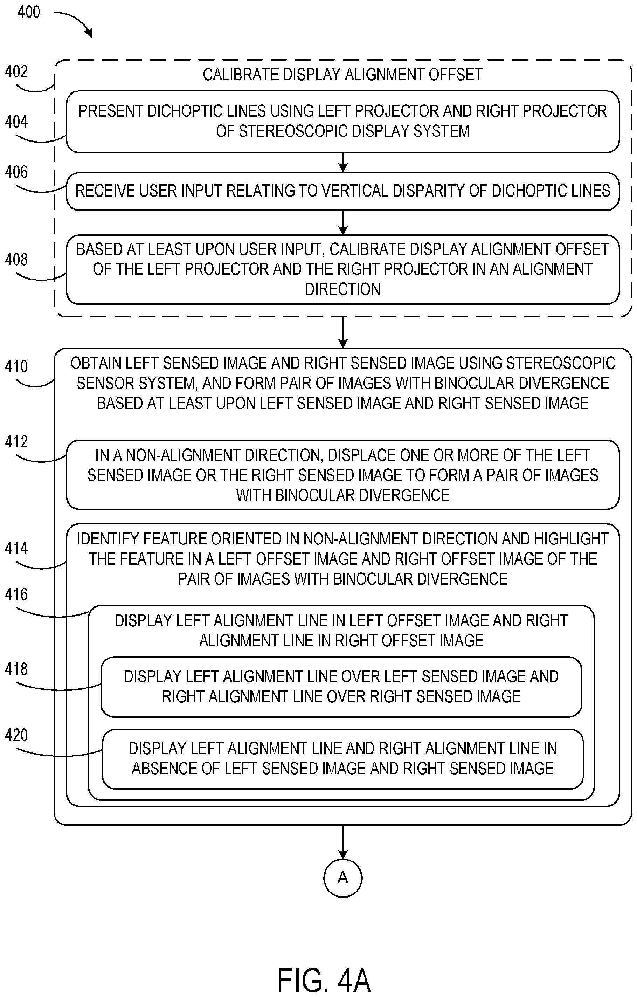

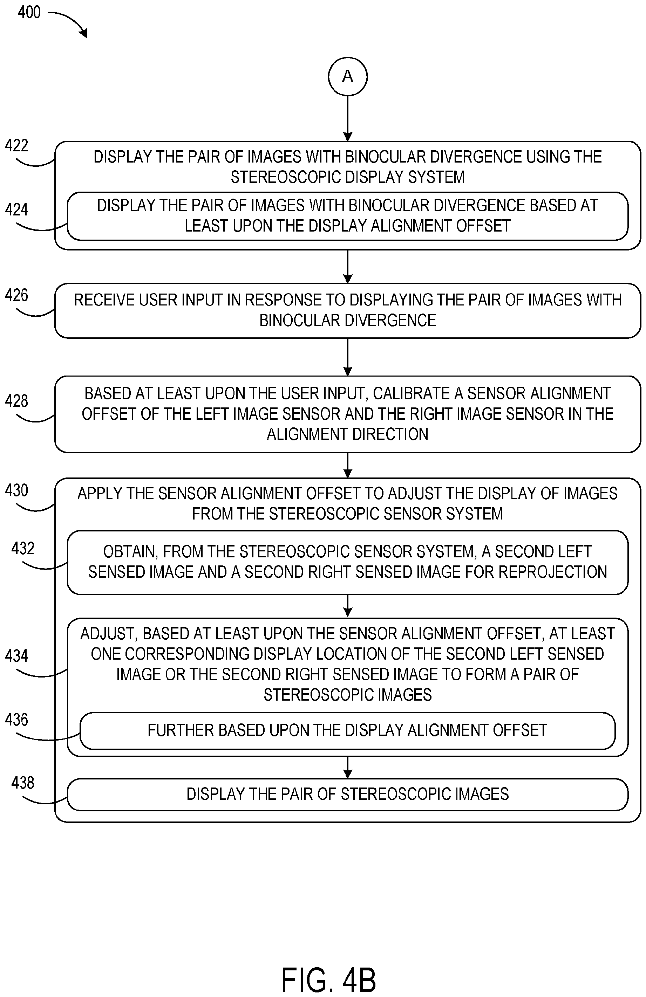

FIG. 4 illustrates a flowchart illustrating an example method 400 for utilizing a sensor alignment offset. Method 400 is performed by a display device having a stereoscopic sensor system and a stereoscopic display system, such as the HMD device 104 and the display device 200, for example. Method 400 optionally comprises, at 402, presenting dichoptic lines using a left projector and a right projector of the stereoscopic display system. Method 400 further comprises, at 404, receiving a first user input relating to a vertical disparity of the dichoptic lines, such as to adjust the dichoptic lines to reduce a vertical disparity between the dichoptic line displayed by the left project and the dichoptic line displayed by the right projector, for example. Method 400 further comprises, at 408, based at least upon the first user input, calibrating a display alignment offset of the left projector and the right projector in an alignment direction. Calibrating the display alignment offset comprises, based at least upon the first user input, determining an adjustment to make to vertical positions of images displayed by one or both of the left projector or the right projector. In such a manner, method 400 performs a user-in-the-loop calibration for calibrating the display alignment offset of the stereoscopic display system. In other examples, method 400 may omit 402.

Method 400 further comprises, at 410, obtaining a left sensed image from a left image sensor of the stereoscopic sensor system and a right sensed image from a right sensor of the stereoscopic sensor system, and forming a pair of images with binocular divergence based at least upon the left sensed image and the right sensed image. In some examples, forming the pair of images with binocular divergence comprises, at 412, in a non-alignment direction, displacing one or more of the left sensed image or the right sensed image to form a left offset image and a right offset image. In such examples, the displacement can be sufficiently far in the non-alignment direction for the brain to interpret the left offset image and the right offset image as being separate images, and thus not fuse the left offset image and the right offset image into a single image. This may result in a double vision-like appearance for the viewer.

In other examples, at 414, forming the pair of images with binocular divergence comprises identifying a feature in the left sensed image and the right sensed image that is oriented in a non-alignment direction, and highlighting the feature in the display of the left offset image and the right offset image. For example, the feature can be highlighted by generating an alignment line to display over the feature in each image. More particularly, a left alignment line can be displayed in the left offset image and a right alignment line can be displayed in the right offset image, as indicated at 416. The feature can be located in each image using, for example, a suitable edge detection algorithm, examples of which are given above. Then, a brightness, coloration, and/or other property of pixels corresponding to the feature in the displayed left offset image and right offset image can be modified to increase a visibility of the feature in each of the left offset image and the right offset image. In some examples, at 418, the left alignment line is displayed as overlaying the left sensed image, and the right alignment line is displayed as overlaying the right sensed image. In other examples, at 420, the left alignment line and the right alignment line are displayed in isolation, or otherwise in the absence of the left sensed image and the right sensed image.

Method 400 further comprises, at 422, displaying the pair of images with binocular divergence using the stereoscopic display system. In examples that calibrated the display alignment offset, method 400 comprises, displaying, using the stereoscopic display system, the pair of images with binocular divergence based at least upon the display alignment offset, as indicated at 424. This can enable the display device to separately address misalignment issues in the stereoscopic display system and/or misalignment issues in the stereoscopic sensor system. Method 400 further comprises, at 426, receiving a second user input in response to displaying the pair of images with binocular divergence. The second user input relates to a vertical disparity of the pair of images with binocular divergence in the alignment direction. Additionally, method 400 comprises, at 428, based at least upon the second user input, calibrating a sensor alignment offset of the left image sensor and the right image sensor in the alignment direction. Therefore, method 400 performs a user-in-the-loop calibration for calibrating the sensor alignment offset. In other examples, method 400 may perform 410-428 before 402.

Method 400 also comprises, at 430, applying the sensor alignment offset to adjust the display of images from the stereoscopic sensor system. Applying the sensor alignment offset comprises, at 432, obtaining, from the stereoscopic sensor system, a second left sensed image and a second right sensed image for reprojection. Additionally, applying the sensor alignment offset comprises, at 434, adjusting, based at least upon the sensor alignment offset, at least one corresponding display location of the second left sensed image or the second right sensed image to form an adjusted pair of stereoscopic images. In some examples, displaying the adjusted pair of stereoscopic images can further be based at least upon the display alignment offset, as indicated at 436. Further, method 400 comprises, at 438, displaying the adjusted pair of stereoscopic images using the stereoscopic display system. In such a manner, method 400 displays sensed image data from the stereoscopic sensor system that addresses misalignment issues in both the stereoscopic sensor system and the stereoscopic display system.

A display device configured to utilize a sensor alignment offset as disclosed herein can help to address misalignment of a stereoscopic sensor system with respect to the real world as well as a misalignment of a stereoscopic display system with respect to the user of the display device. Further, the sensor alignment offset can help to reduce disparity when viewing sensor images and thus, reduce user discomfort in such applications.

In some examples, the methods and processes described herein may be tied to a computing system of one or more computing devices. In particular, such methods and processes may be implemented as a computer-application program or service, an application-programming interface (API), a library, and/or other computer-program product.

FIG. 5 schematically shows an example computing system 500 that can enact one or more of the methods and processes described above. Computing system 500 is shown in simplified form. Computing system 500 may take the form of one or more personal computers, server computers, tablet computers, home-entertainment computers, network computing devices, gaming devices, mobile computing devices, mobile communication devices (e.g., smart phone), and/or other computing devices. The HMD device 104 and the display device 200 are examples of computing system 500.

Computing system 500 includes a logic subsystem 502 and a storage subsystem 504. Computing system 500 may optionally include a display subsystem 506, input subsystem 508, communication subsystem 510, and/or other components not shown in FIG. 5.

Logic subsystem 502 includes one or more physical devices configured to execute instructions. For example, the logic machine may be configured to execute instructions that are part of one or more applications, services, programs, routines, libraries, objects, components, data structures, or other logical constructs. Such instructions may be implemented to perform a task, implement a data type, transform the state of one or more components, achieve a technical effect, or otherwise arrive at a desired result.

The logic machine may include one or more processors configured to execute software instructions. Additionally or alternatively, the logic machine may include one or more hardware or firmware logic machines configured to execute hardware or firmware instructions. Processors of the logic machine may be single-core or multi-core, and the instructions executed thereon may be configured for sequential, parallel, and/or distributed processing. Individual components of the logic machine optionally may be distributed among two or more separate devices, which may be remotely located and/or configured for coordinated processing. Aspects of the logic machine may be virtualized and executed by remotely accessible, networked computing devices configured in a cloud-computing configuration.

Storage subsystem 504 includes one or more physical devices configured to hold instructions executable by the logic machine to implement the methods and processes described herein. When such methods and processes are implemented, the state of storage subsystem 504 may be transformed-e.g., to hold different data.

Storage subsystem 504 may include removable and/or built-in devices. Storage subsystem 504 may include optical memory (e.g., CD, DVD, HD-DVD, Blu-Ray Disc, etc.), semiconductor memory (e.g., RAM, EPROM, EEPROM, etc.), and/or magnetic memory (e.g., hard-disk drive, floppy-disk drive, tape drive, MRAM, etc.), among others. Storage subsystem 504 may include volatile, nonvolatile, dynamic, static, read/write, read-only, random-access, sequential-access, location-addressable, file-addressable, and/or content-addressable devices.

It will be appreciated that storage subsystem 504 includes one or more physical devices. However, aspects of the instructions described herein alternatively may be propagated by a communication medium (e.g., an electromagnetic signal, an optical signal, etc.) that is not held by a physical device for a finite duration.

Aspects of logic subsystem 502 and storage subsystem 504 may be integrated together into one or more hardware-logic components. Such hardware-logic components may include field-programmable gate arrays (FPGAs), program- and application-specific integrated circuits (PASIC / ASICs), program- and application-specific standard products (PSSP / ASSPs), system-on-a-chip (SOC), and complex programmable logic devices (CPLDs), for example.

The terms "module," "program," and "engine" may be used to describe an aspect of computing system 500 implemented to perform a particular function. In some cases, a module, program, or engine may be instantiated via logic subsystem 502 executing instructions held by storage subsystem 504. It will be understood that different modules, programs, and/or engines may be instantiated from the same application, service, code block, object, library, routine, API, function, etc. Likewise, the same module, program, and/or engine may be instantiated by different applications, services, code blocks, objects, routines, APIs, functions, etc. The terms "module," "program," and "engine" may encompass individual or groups of executable files, data files, libraries, drivers, scripts, database records, etc.

When included, display subsystem 506 may be used to present a visual representation of data held by storage subsystem 504. This visual representation may take the form of a graphical user interface (GUI). As the herein described methods and processes change the data held by the storage machine, and thus transform the state of the storage machine, the state of display subsystem 506 may likewise be transformed to visually represent changes in the underlying data. Display subsystem 506 may include one or more display devices utilizing virtually any type of technology. Such display devices may be combined with logic subsystem 502 and/or storage subsystem 504 in a shared enclosure, or such display devices may be peripheral display devices.

When included, input subsystem 508 may comprise or interface with one or more user-input devices such as a keyboard, mouse, touch screen, or game controller. In some embodiments, the input subsystem may comprise or interface with selected natural user input (NUI) componentry. Such componentry may be integrated or peripheral, and the transduction and/or processing of input actions may be handled on- or off-board. Example NUI componentry may include a microphone for speech and/or voice recognition; an infrared, color, stereoscopic, and/or depth camera for machine vision and/or gesture recognition; a head tracker, eye tracker, accelerometer, and/or gyroscope for motion detection and/or intent recognition; as well as electric-field sensing componentry for assessing brain activity.

When included, communication subsystem 510 may be configured to communicatively couple computing system 500 with one or more other computing devices. Communication subsystem 510 may include wired and/or wireless communication devices compatible with one or more different communication protocols. As non-limiting examples, the communication subsystem may be configured for communication via a wireless telephone network, or a wired or wireless local- or wide-area network. In some embodiments, the communication subsystem may allow computing system 500 to send and/or receive messages to and/or from other devices via a network such as the Internet.

Another example provides a method for calibrating a sensor alignment offset on a display device comprising a stereoscopic sensor system and a stereoscopic display system. The method comprises obtaining a left sensed image from a left image sensor of the stereoscopic sensor system and a right sensed image from a right image sensor of the stereoscopic sensor system, forming a pair of images with binocular divergence based at least upon the left sensed image and the right sensed image, displaying the pair of images with binocular divergence using the stereoscopic display system, receiving a user input in response to displaying the pair of images with binocular divergence, the user input relating to a vertical disparity of the pair of images with binocular divergence in an alignment direction, based at least upon the user input, calibrating the sensor alignment offset of the left image sensor and the right image sensor in the alignment direction, and applying the sensor alignment offset to adjust the display of images from the stereoscopic sensor system. In some such examples, forming the pair of images with binocular divergence alternatively or additionally comprises identifying a feature oriented in a non-alignment direction and highlighting the feature in a left offset image and a right offset image of the pair of images with binocular divergence. In some such examples, highlighting the feature alternatively or additionally comprises displaying a left alignment line in the left offset image and a right alignment line in the right offset image. In some such examples, displaying the pair of images with binocular divergence alternatively or additionally comprises displaying the left alignment line over the left sensed image and displaying the right alignment line over the right sensed image. In some such examples, applying the sensor alignment offset to adjust the display of images from the stereoscopic sensor system alternatively or additionally comprises obtaining, from the stereoscopic sensor system, a second left sensed image and a second right sensed image for reprojection, adjusting, based at least upon the sensor alignment offset, a display location of one or more of the second left sensed image or the second right sensed image to form adjusted stereoscopic images, and displaying the adjusted stereoscopic image using the stereoscopic display system. In some such examples, the user input is alternatively or additionally a first user input, the stereoscopic display system alternatively or additionally includes a left projector and a right projector, and the method alternatively or additionally comprises calibrating the stereoscopic display system by presenting dichoptic lines using the stereoscopic display system and receiving another user input relating to a vertical disparity of the dichoptic lines to calibrate a display alignment offset. In some such examples, displaying the pair of images with binocular divergence using the stereoscopic display system alternatively or additionally comprises displaying the pair of images with binocular divergence based at least upon the display alignment offset.

Another example provides a display device comprising a stereoscopic sensor system including a left image sensor and a right image sensor, a stereoscopic display system, a logic subsystem, and a storage subsystem comprising instructions executable by the logic subsystem to obtain a left sensed image from the left image sensor and a right sensed image from the right image sensor, form a pair of images with binocular divergence based at least upon the left sensed image and the right sensed image, display the pair of images with binocular divergence using the stereoscopic display system, receive a user input in response to displaying the pair of images with binocular divergence, the user input relating to a vertical disparity of the pair of images with binocular divergence in an alignment direction, based at least upon the user input, calibrate a sensor alignment offset of the left image sensor and the right image sensor in the alignment direction, and apply the sensor alignment offset to adjust the display of images from the stereoscopic sensor system. In some such examples, the instructions executable to obtain the left sensed image from the left image sensor and the right sensed image from the right image sensor alternatively or additionally comprise instructions executable to identify a feature oriented in a non-alignment direction and highlight the feature in a left offset image and a right offset image of the pair of images with binocular divergence. In some such examples, the instructions executable to highlight the feature in the left offset image and the right offset image of the pair of images with binocular divergence alternatively or additionally comprise instructions executable to display a left alignment line in the left offset image and a right alignment line in the right offset image. In some such examples, the instructions executable to display the pair of images with binocular divergence alternatively or additionally comprise instructions executable to display the left alignment line over the left sensed image and to display the right alignment line over the right sensed image. In some such examples, the instructions executable to apply the sensor alignment offset to adjust the display of images from the stereoscopic sensor system alternatively or additionally comprise instructions executable to obtain, from the stereoscopic sensor system, a second left sensed image and a second right sensed image for reproj ection, adjust, based at least upon the sensor alignment offset, a display location of one or more of the second left sensed image or the second right sensed image to form adjusted stereoscopic images, and display the adjusted stereoscopic images using the stereoscopic display system. In some such examples, the stereoscopic display system alternatively or additionally includes a left projector and a right projector, and the instructions are alternatively or additionally executable to present dichoptic lines using the stereoscopic display system and receive another user input relating to a vertical disparity of the dichoptic lines to calibrate a display alignment offset. In some such examples, the instructions executable to display the pair of images with binocular divergence using the stereoscopic display system alternatively or additionally comprise instructions executable to display the pair of images with binocular divergence based at least upon the display alignment offset.

Another example provides a head mounted display (HMD) device comprising a stereoscopic sensor system including a left image sensor and a right image sensor, a stereoscopic display system including a left projector and a right projector, a logic subsystem, and a storage subsystem comprising instructions executable by the logic subsystem to present dichoptic lines using the stereoscopic display system, receive a user input relating to a vertical disparity of the dichoptic lines to calibrate a display alignment offset of a left display image using the left projector, and a right display image using the right projector, obtain a left sensed image from the left image sensor and a right sensed image from the right image sensor, form a pair of images with binocular divergence based at least upon the left sensed image and the right sensed image, display the pair of images with binocular divergence using the stereoscopic display system, receive another user input relating to a vertical disparity of the pair of images with binocular divergence in an alignment direction, in response, calibrate a sensor alignment offset of the left image sensor and the right image sensor in the alignment direction, and apply the sensor alignment offset to adjust the display of images from the stereoscopic sensor system. In some such examples, the instructions executable to obtain the left sensed image from the left image sensor and the right sensed image from the right image sensor comprise instructions alternatively or additionally executable to identify a feature oriented in a non-alignment direction and highlight the feature in a left offset image and a right offset image of the pair of images with binocular divergence. In some such examples, the instructions executable to highlight the feature in the left offset image and the right offset image of the pair of images with binocular divergence alternatively or additionally comprise instructions executable to display a left alignment line in the left offset image and a right alignment line in the right offset image. In some such examples, the instructions executable to display the pair of images with binocular divergence alternatively or additionally comprise instructions executable to display the left alignment line over the left sensed image and to display the right alignment line over the right sensed image. In some such examples, the instructions executable to display the pair of images with binocular divergence alternatively or additionally comprise instructions executable to display the left alignment line and to display the right alignment line in absence of the left sensed image and the right sensed image. In some such examples, the instructions executable to receive the user input relating to the vertical disparity of the pair of images with binocular divergence in the alignment direction are alternatively or additionally executable to receive a gesture input using the stereoscopic sensor system.

It will be understood that the configurations and/or approaches described herein are exemplary in nature, and that these specific embodiments or examples are not to be considered in a limiting sense, because numerous variations are possible. The specific routines or methods described herein may represent one or more of any number of processing strategies. As such, various acts illustrated and/or described may be performed in the sequence illustrated and/or described, in other sequences, in parallel, or omitted. Likewise, the order of the above-described processes may be changed.

The subject matter of the present disclosure includes all novel and non-obvious combinations and sub-combinations of the various processes, systems and configurations, and other features, functions, acts, and/or properties disclosed herein, as well as any and all equivalents thereof.
**The following is a list of further preferred embodiments of the invention:**
Embodiment 1. A method for calibrating a sensor alignment offset on a display device comprising a stereoscopic sensor system and a stereoscopic display system, the method comprising:
   obtaining a left sensed image from a left image sensor of the stereoscopic sensor system and a right sensed image from a right image sensor of the stereoscopic sensor system,
   forming a pair of images with binocular divergence based at least upon the left sensed image and the right sensed image,
   displaying the pair of images with binocular divergence using the stereoscopic display system,
   receiving a user input in response to displaying the pair of images with binocular divergence, the user input relating to a vertical disparity of the pair of images with binocular divergence in an alignment direction,
   based at least upon the user input, calibrating the sensor alignment offset of the left image sensor and the right image sensor in the alignment direction, and
   applying the sensor alignment offset to adjust the display of images from the stereoscopic sensor system.
Embodiment 2. The method of embodiment 1, wherein forming the pair of images with binocular divergence comprises identifying a feature oriented in a non-alignment direction and highlighting the feature in a left offset image and a right offset image of the pair of images with binocular divergence.
Embodiment 3. The method of embodiment 2, wherein highlighting the feature comprises displaying a left alignment line in the left offset image and a right alignment line in the right offset image.
Embodiment 4. The method of embodiment 3, wherein displaying the pair of images with binocular divergence comprises displaying the left alignment line over the left sensed image and displaying the right alignment line over the right sensed image.
Embodiment 5. The method of embodiment 1, wherein applying the sensor alignment offset to adjust the display of images from the stereoscopic sensor system comprises
   obtaining, from the stereoscopic sensor system, a second left sensed image and a second right sensed image for reprojection,
   adjusting, based at least upon the sensor alignment offset, a display location of one or more of the second left sensed image or the second right sensed image to form adjusted stereoscopic images, and
   displaying the adjusted stereoscopic image using the stereoscopic display system.
Embodiment 6. The method of embodiment 1, wherein the user input is a first user input, wherein the stereoscopic display system includes a left projector and a right projector, and wherein the method further comprises calibrating the stereoscopic display system by presenting dichoptic lines using the stereoscopic display system and receiving another user input relating to a vertical disparity of the dichoptic lines to calibrate a display alignment offset.
Embodiment 7. The method of embodiment 6, wherein displaying the pair of images with binocular divergence using the stereoscopic display system comprises displaying the pair of images with binocular divergence based at least upon the display alignment offset.
Embodiment 8. A display device comprising:
   a stereoscopic sensor system including a left image sensor and a right image sensor;
   a stereoscopic display system;
   a logic subsystem; and
   a storage subsystem comprising instructions executable by the logic subsystem to
      obtain a left sensed image from the left image sensor and a right sensed image from the right image sensor,
      form a pair of images with binocular divergence based at least upon the left sensed image and the right sensed image,
      display the pair of images with binocular divergence using the stereoscopic display system,
      receive a user input in response to displaying the pair of images with binocular divergence, the user input relating to a vertical disparity of the pair of images with binocular divergence in an alignment direction,
      based at least upon the user input, calibrate a sensor alignment offset of the left image sensor and the right image sensor in the alignment direction, and
      apply the sensor alignment offset to adjust the display of images from the stereoscopic sensor system.
Embodiment 9. The display device of embodiment 8, wherein the instructions executable to obtain the left sensed image from the left image sensor and the right sensed image from the right image sensor comprise instructions executable to identify a feature oriented in a non-alignment direction and highlight the feature in a left offset image and a right offset image of the pair of images with binocular divergence.
Embodiment 10. The display device of embodiment 9, wherein the instructions executable to highlight the feature in the left offset image and the right offset image of the pair of images with binocular divergence comprise instructions executable to display a left alignment line in the left offset image and a right alignment line in the right offset image.
Embodiment 11. The display device of embodiment 10, wherein the instructions executable to display the pair of images with binocular divergence comprise instructions executable to display the left alignment line over the left sensed image and to display the right alignment line over the right sensed image.
Embodiment 12. The display device of embodiment 8, wherein the instructions executable to apply the sensor alignment offset to adjust the display of images from the stereoscopic sensor system comprise instructions executable to
   obtain, from the stereoscopic sensor system, a second left sensed image and a second right sensed image for reprojection,
   adjust, based at least upon the sensor alignment offset, a display location of one or more of the second left sensed image or the second right sensed image to form adjusted stereoscopic images, and
   display the adjusted stereoscopic images using the stereoscopic display system.
Embodiment 13. The display device of embodiment 8, wherein the stereoscopic display system includes a left projector and a right projector, and wherein the instructions are further executable to present dichoptic lines using the stereoscopic display system and receive another user input relating to a vertical disparity of the dichoptic lines to calibrate a display alignment offset.
Embodiment 14. The display device of embodiment 13, wherein the instructions executable to display the pair of images with binocular divergence using the stereoscopic display system comprise instructions executable to display the pair of images with binocular divergence based at least upon the display alignment offset.
Embodiment 15. A head mounted display (HMD) device comprising:
   a stereoscopic sensor system including a left image sensor and a right image sensor;
   a stereoscopic display system including a left projector and a right projector;
   a logic subsystem; and
   a storage subsystem comprising instructions executable by the logic subsystem to
      present dichoptic lines using the stereoscopic display system;
      receive a user input relating to a vertical disparity of the dichoptic lines to calibrate a display alignment offset of a left display image using the left projector, and a right display image using the right projector;
      obtain a left sensed image from the left image sensor and a right sensed image from the right image sensor;
      form a pair of images with binocular divergence based at least upon the left sensed image and the right sensed image;
      display the pair of images with binocular divergence using the stereoscopic display system;
      receive another user input relating to a vertical disparity of the pair of images with binocular divergence in an alignment direction;
      in response, calibrate a sensor alignment offset of the left image sensor and the right image sensor in the alignment direction; and
      apply the sensor alignment offset to adjust the display of images from the stereoscopic sensor system.
Embodiment 16. The HMD device of embodiment 15, wherein the instructions executable to obtain the left sensed image from the left image sensor and the right sensed image from the right image sensor comprise instructions executable to identify a feature oriented in a non-alignment direction and highlight the feature in a left offset image and a right offset image of the pair of images with binocular divergence.
Embodiment 17. The HMD device of embodiment 16, wherein the instructions executable to highlight the feature in the left offset image and the right offset image of the pair of images with binocular divergence comprise instructions executable to display a left alignment line in the left offset image and a right alignment line in the right offset image.
Embodiment 18. The HMD device of embodiment 17, wherein the instructions executable to display the pair of images with binocular divergence comprise instructions executable to display the left alignment line over the left sensed image and to display the right alignment line over the right sensed image.
Embodiment 19. The HMD device of embodiment 17, wherein the instructions executable to display the pair of images with binocular divergence comprise instructions executable to display the left alignment line and to display the right alignment line in absence of the left sensed image and the right sensed image.
Embodiment 20. The HMD device of embodiment 15, wherein the instructions executable to receive the user input relating to the vertical disparity of the pair of images with binocular divergence in the alignment direction are executable to receive a gesture input using the stereoscopic sensor system.

## Claims

1. A method for calibrating a sensor alignment offset (234) on a display device (200) comprising a stereoscopic sensor system (212) and a stereoscopic display system (202), the method comprising:
obtaining a left sensed image from a left image sensor of the stereoscopic sensor system and a right sensed image from a right image sensor of the stereoscopic sensor system (410),
forming a pair of images with binocular divergence based at least upon the left sensed image and the right sensed image (410),
displaying the pair of images with binocular divergence using the stereoscopic display system (422),
receiving a user input in response to displaying the pair of images with binocular divergence (426), the user input relating to a vertical disparity of the pair of images with binocular divergence in an alignment direction,
based at least upon the user input, calibrating the sensor alignment offset of the left image sensor and the right image sensor in the alignment direction (428), and
applying the sensor alignment offset to adjust the display of images from the stereoscopic sensor system (430).

2. The method of claim 1, wherein forming the pair of images with binocular divergence comprises identifying a feature oriented in a non-alignment direction and highlighting the feature in a left offset image and a right offset image of the pair of images with binocular divergence.

3. The method of claim 2, wherein highlighting the feature comprises displaying a left alignment line in the left offset image and a right alignment line in the right offset image.

4. The method of claim 3, wherein displaying the pair of images with binocular divergence comprises displaying the left alignment line over the left sensed image and displaying the right alignment line over the right sensed image.

5. The method according to any one of claims 1 to 4, wherein applying the sensor alignment offset to adjust the display of images from the stereoscopic sensor system comprises
obtaining, from the stereoscopic sensor system, a second left sensed image and a second right sensed image for reprojection,
adjusting, based at least upon the sensor alignment offset, a display location of one or more of the second left sensed image or the second right sensed image to form adjusted stereoscopic images, and
displaying the adjusted stereoscopic image using the stereoscopic display system.

6. The method according to any one of claims 1 to 5, wherein the user input is a first user input, wherein the stereoscopic display system includes a left projector and a right projector, and wherein the method further comprises calibrating the stereoscopic display system by presenting dichoptic lines using the stereoscopic display system and receiving another user input relating to a vertical disparity of the dichoptic lines to calibrate a display alignment offset.

7. The method of claim 6, wherein displaying the pair of images with binocular divergence using the stereoscopic display system comprises displaying the pair of images with binocular divergence based at least upon the display alignment offset.

8. A display device (200) comprising:
a stereoscopic sensor system (212) including a left image sensor (214) and a right image sensor (218);
a stereoscopic display system (202);
a logic subsystem (222); and
a storage subsystem (504) comprising instructions executable by the logic subsystem (222) to
obtain a left sensed image from the left image sensor and a right sensed image from the right image sensor (410),
form a pair of images with binocular divergence based at least upon the left sensed image and the right sensed image (410),
display the pair of images with binocular divergence using the stereoscopic display system (422),
receive a user input in response to displaying the pair of images with binocular divergence (426), the user input relating to a vertical disparity of the pair of images with binocular divergence in an alignment direction,
based at least upon the user input, calibrate a sensor alignment offset of the left image sensor and the right image sensor in the alignment direction (428), and
apply the sensor alignment offset to adjust the display of images from the stereoscopic sensor system (430).

9. The display device of claim 8, wherein the instructions executable to obtain the left sensed image from the left image sensor and the right sensed image from the right image sensor comprise instructions executable to identify a feature oriented in a non-alignment direction and highlight the feature in a left offset image and a right offset image of the pair of images with binocular divergence.

10. The display device of claim 9, wherein the instructions executable to highlight the feature in the left offset image and the right offset image of the pair of images with binocular divergence comprise instructions executable to display a left alignment line in the left offset image and a right alignment line in the right offset image, and/or
wherein the instructions executable to display the pair of images with binocular divergence comprise instructions executable to display the left alignment line over the left sensed image and to display the right alignment line over the right sensed image.

11. The display device according to any one of claims 8 to 10, wherein the instructions executable to apply the sensor alignment offset to adjust the display of images from the stereoscopic sensor system comprise instructions executable to
obtain, from the stereoscopic sensor system, a second left sensed image and a second right sensed image for reprojection,
adjust, based at least upon the sensor alignment offset, a display location of one or more of the second left sensed image or the second right sensed image to form adjusted stereoscopic images, and
display the adjusted stereoscopic images using the stereoscopic display system.

12. The display device according to any one of claims 8 to 11, wherein the stereoscopic display system includes a left projector and a right projector, and wherein the instructions are further executable to present dichoptic lines using the stereoscopic display system and receive another user input relating to a vertical disparity of the dichoptic lines to calibrate a display alignment offset, and/or
wherein the instructions executable to display the pair of images with binocular divergence using the stereoscopic display system comprise instructions executable to display the pair of images with binocular divergence based at least upon the display alignment offset.

13. A head mounted display (HMD) device (200) comprising:
a stereoscopic sensor system (212) including a left image sensor (214) and a right image sensor (218);
a stereoscopic display system (202) including a left projector (204) and a right projector (208);
a logic subsystem (222); and
a storage subsystem (504) comprising instructions executable by the logic subsystem (222) to
present dichoptic lines using the stereoscopic display system (404);
receive a user input relating to a vertical disparity of the dichoptic lines to calibrate a display alignment offset of a left display image using the left projector, and a right display image using the right projector (406);
obtain a left sensed image from the left image sensor and a right sensed image from the right image sensor (410);
form a pair of images with binocular divergence based at least upon the left sensed image and the right sensed image (410);
display the pair of images with binocular divergence using the stereoscopic display system (422);
receive another user input relating to a vertical disparity of the pair of images with binocular divergence in an alignment direction (426);
in response, calibrate a sensor alignment offset of the left image sensor and the right image sensor in the alignment direction (428); and
apply the sensor alignment offset to adjust the display of images from the stereoscopic sensor system (430).

14. The HMD device of claim 13, wherein the instructions executable to obtain the left sensed image from the left image sensor and the right sensed image from the right image sensor comprise instructions executable to identify a feature oriented in a non-alignment direction and highlight the feature in a left offset image and a right offset image of the pair of images with binocular divergence, and/or
wherein the instructions executable to highlight the feature in the left offset image and the right offset image of the pair of images with binocular divergence comprise instructions executable to display a left alignment line in the left offset image and a right alignment line in the right offset image.

15. The HMD device of claim 14, wherein the instructions executable to display the pair of images with binocular divergence comprise instructions executable to display the left alignment line over the left sensed image and to display the right alignment line over the right sensed image, or
wherein the instructions executable to display the pair of images with binocular divergence comprise instructions executable to display the left alignment line and to display the right alignment line in absence of the left sensed image and the right sensed image, and/or
wherein the instructions executable to receive the user input relating to the vertical disparity of the pair of images with binocular divergence in the alignment direction are executable to receive a gesture input using the stereoscopic sensor system.
